# EUROPEAN PATENT APPLICATION

(11) **EP 3 476 522 A1**
(43) Date of publication of application: **01.05.2019**
(21) Application number: 18202323.4
(22) Date of filing: 24.10.2018
(51) Int. Cl.: B23K 35/30, B23K 35/02, C22C 38/00, C22C 38/02, C22C 38/04, C22C 38/06, C22C 38/08, C22C 38/12, C22C 38/14, C22C 38/16, C22C 38/18, C22C 38/32, C22C 38/38

(54) **ULTRA-LOW SILICON WIRE FOR WELDING HAVING EXCELLENT POROSITY RESISTANCE AND ELECTRODEPOSITION COATING PROPERTIES, AND DEPOSITED METAL OBTAINED THEREFROM**

(30) Priority: 27.10.2017 KR 20170141240
(71) Applicant: Hyundai Welding Co., Ltd., Seoul 06168 (KR)
(72) Inventor: Seo, Ji Seok, 37863 Pohang-si (KR); Kim, Jae Jung, 37863 Pohang-si (KR); Park, Sang Min, 37863 Pohang-si (KR); Kim, Yong Deog, 37863 Pohang-si (KR); Kim, Seok Hwan, 37863 Pohang-si (KR)
(74) Representative: Nederlandsch Octrooibureau

(57) **Abstract**

An ultra-low silicon wire for welding having excellent porosity resistance and electrodeposition coating properties is provided. The ultra-low silicon wire for welding having excellent porosity resistance and electrodeposition coating properties includes: by wt %, 0.001 to 0.30% of C; 0.15% or less of Si; 0.50 to 3.00% of Mn; 0.030% or less of P; 0.030% or less of S; and a balance of Fe and inevitable impurities.

## Description

### CROSS-REFERENCE TO RELATED APPLICATION

This application claims the benefit of priority to Korean Patent Application No. 10-2017-0141240, filed on October 27, 2017 with the Korean Intellectual Property Office, the entirety of which is incorporated herein by reference.

### BACKGROUND

The present disclosure relates to a wire for welding used in gas metal arc welding and flux-cored arc welding using shielding gases, and more specifically, to an ultra-low silicon wire for welding having improved porosity resistance of a weld joint and electrodeposition coating properties of a bead surface after welding, and a deposited metal obtained therefrom.

In general, coating methods are classified as a spray coating method, an electrostatic (powder) coating method, an electrodeposition coating method, and the like.

The electrodeposition coating method may achieve better coating quality and a low coating loss rate, as compared to the other coating methods. Different from the spray coating method, when an electrical charge reaches a certain level, the electrodeposition coating method does not form a coating having a greater thickness, so that a uniform thickness and smoothness may be achieved. Further, the electrodeposition coating method requires a small amount of coating material, thereby reducing manufacturing costs.

However, slag generated on the surfaces of weld joints after welding may cause a deterioration in the electrodeposition coating properties of the weld joint, so that corrosion issues have arisen in electronics companies and automakers, which require various types of components that need to be subjected to electrodeposition coating.

Moreover, as galvanized steel sheets have increasingly been used in automotive parts in recent years to improve durability, it may be challenging to ensure porosity resistance of weld joints. This is because a low vaporization temperature of galvanized layers may cause pores to be easily generated within weld joints.

Therefore, there is a need to develop welding materials having excellent porosity resistance and electrodeposition coating properties, while having a bead exterior.

### SUMMARY

An aspect of the present disclosure may provide an ultra-low silicon welding material having improved porosity resistance and electrodeposition coating properties of a weld joint.

An aspect of the present disclosure may provide a deposited metal obtained using the ultra-low silicon welding material.

According to an aspect of the present disclosure, an ultra-low silicon wire for welding having excellent porosity resistance and electrodeposition coating properties may include: by wt%, 0.001 to 0.30% of C; 0.15% or less of Si; 0.50 to 3.00% of Mn; 0.030% or less of P; 0.030% or less of S; and a balance of Fe and inevitable impurities.

The ultra-low silicon wire for welding may satisfy a Si²-to-Mn ratio of 0.015 or less.

The content of Si may be within a range of 0.001 to 0.1%.

The wire for welding may further include: at least one selected from among 0.001 to 0.900% of Ni, 0.001 to 0.100% of Cr, 0.001 to 0.500% of Mo, and 0.50% or less of Cu.

The wire for welding may further include: at least one selected from among 0.50% or less of Ti, 0.50% or less of Al, 0.50% or less of Nb, 0.10% or less of V, and 0.10% or less of Zr.

The ultra-low silicon wire for welding may further include: 0.01% or less of B or 0.50% or less of REM.

The ultra-low silicon wire for welding may be a solid wire or a flux-cored wire.

According to an aspect of the present disclosure, a deposited metal having electrodeposition coating properties, obtained by welding a welding base metal using a wire for welding, may include slag attached to a surface thereof, and, in the overall surface area of the deposited metal, an area fraction of silicon-based oxide slag may be 5% or less.

The wire for welding may include: by wt %, 0.001 to 0.30% of C; 0.15% or less of Si; 0.50 to 3.00% of Mn; 0.030% or less of P; 0.030% or less of S; and a balance of Fe and inevitable impurities.

The wire for welding may satisfy a Si²-to-Mn ratio of 0.015 or less.

The ultra-low silicon wire for welding may include 0.001 to 0.1% of Si.

The wire for welding may further include: at least one selected from among 0.001 to 0.900% of Ni, 0.001 to 0.100% of Cr, 0.001 to 0.500% of Mo, and 0.50% or less of Cu.

The wire for welding may further include: at least one selected from among 0.50% or less of Ti, 0.50% or less of Al, 0.50% or less of Nb, 0.10% or less of V, and 0.10% or less of Zr.

The ultra-low silicon wire for welding may further include: 0.01% or less of B or 0.50% or less of REM.

The ultra-low silicon wire for welding may be a solid wire or a flux-cored wire.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 is a graph illustrating coefficients of thermal expansion of various types of oxides;
FIG. 2 is a graph illustrating electrical conductivity of various types of oxides;
FIG. 3 is a diagram illustrating the range of electrical conductivity of respective materials;
FIG. 4 is a table including bead exterior images and the like obtained when a solid wire is welded, according to an exemplary embodiment in the present disclosure;
FIG. 5 is a table including bead exterior images obtained when a flux-cored wire (a metal-cored wire) is welded, according to an exemplary embodiment in the present disclosure;
FIG. 6 is a table of electrodeposition coating results of deposited metals formed during welding using a conventional welding material and an ultra-low silicon welding material, according to an exemplary embodiment in the present disclosure;
FIG. 7 is a table of energy-dispersive X-ray spectroscopy (EDS) analysis results of slag components of deposited metals formed during welding using the conventional welding material and the ultra-low silicon welding material of FIG. 6; and
FIGS. 8 through 11 are respective views of the EDS analysis results (I, II, III, and IV) of FIG. 7.

### DETAILED DESCRIPTION

Hereinafter, exemplary embodiments in the present disclosure will be described.

The present inventors have discovered that welding using an ultra-low silicon welding material may reduce the occurrence of conventional vitreous silicon-based slag in a deposited metal, make it relatively difficult to separate slag, and improve porosity resistance and electrodeposition coating properties by forming, on the surfaces of beads, manganese-based slag through which an electric current may easily flow during electrodeposition coating, and have proposed the present disclosure.

In detail, Table 1 below shows pilling-bedworth (P-B) ratios of various oxides (ratios of oxide volume to metal volume prior to oxidation), and as the P-B ratio increases, a large amount of stress may generally be applied to the oxide after oxidation, so that the adhesion of the oxide may decrease. However, Table 1 below shows that a SiO₂ oxide has a relatively higher P-B ratio than MnO and FeO oxides, so that the adhesion of the MnO and FeO oxides may be relatively higher than that of the SiO₂ oxide.

**[Table 1]**

| reaction | *ΔG*°_{650*C*} | *ΔG*°_{750*C*} | P-B ratio |
|---|---|---|---|
| 2Fe(s)+O₂→2FeO(s) | -413.3 | -390.4 | 1.68 |
| 2 Mn(s)+O₂→2MnO(s) | -635.4 | -622.2 | 1.75 |
| 4/3Al(s)+O₂→2/3α-Al₂O₃(s) | -925.4 | -902.1 | 1.28 |
| 4/3Cr(s)+O₂→2/3Cr₂O₃(s) | -596.7 | -579.9 | 2.07 |
| Si(s)+O₂→SiO₂(s) | -744.1 | -723.9 | 2.13 |
| 2Ni(s)+O₂→2NiO(s) | -306.7 | -290.0 | 1.65 |
| 2Nb(s)+O₂→2NbO(s) | -670.9 | -652.4 | 1.38 |
| 4/3Sb(s)+O₂→2/3Sb₂O₃(mp.=655°C) | -308.1 | -291.3 | 1.43 |

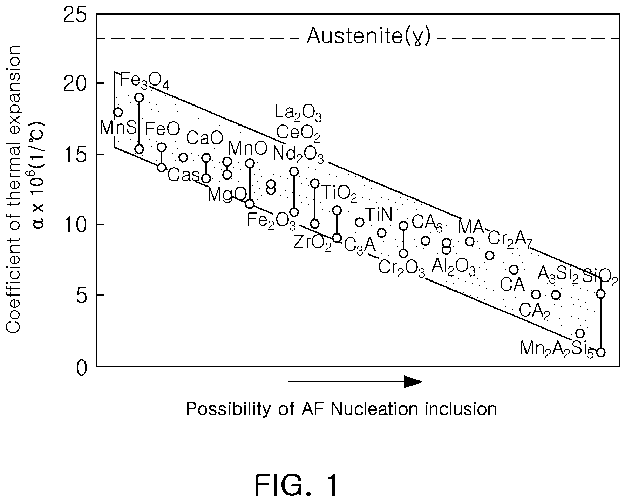

FIG. 1 is a graph illustrating coefficients of thermal expansion of various types of oxides. As illustrated in FIG. 1, it can be seen that since the SiO₂ oxide may have an extremely low coefficient of thermal expansion, unlike the MnO and FeO oxides, the SiO₂ oxide may be highly likely to be separated from the surfaces of weld beads in which the temperature rapidly changes. In contrast, it can be seen that since the MnO oxide may have a coefficient of thermal expansion similar to that of the FeO oxide, the MnO oxide may be less likely to be separated, as compared to the SiO₂ oxide.

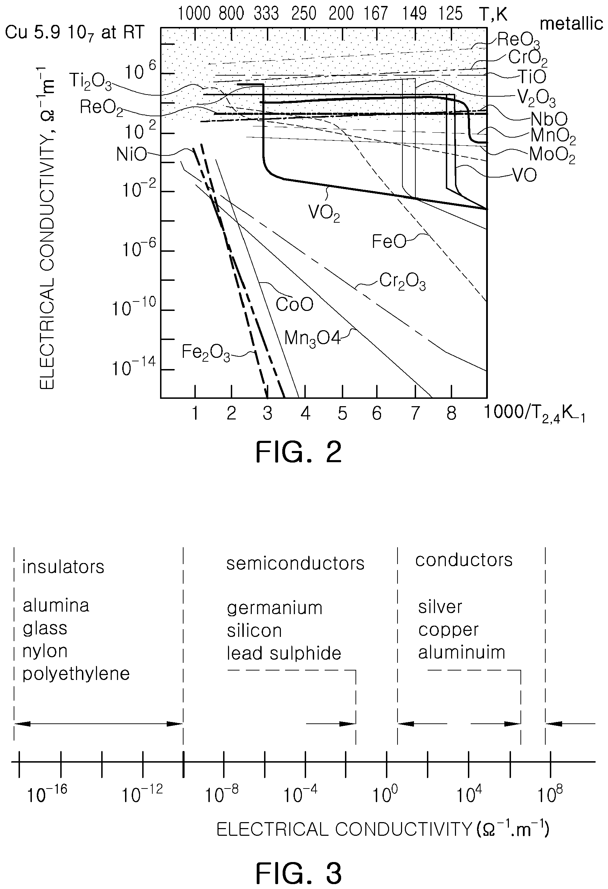

In addition, FIG. 2 is a graph regarding changes in electrical conductivity of various oxides according to temperatures. It can be seen that manganese-based slag (MnO₂) has an electrical conductivity of 10² Ω⁻¹m⁻¹, which is within the electrical conductivity range of a conductor when viewed in the electrical conductivity range graph of FIG. 3.

Thus, considering the above, it can be seen that, when slag, attached to a deposited metal during welding, is silicon-based slag, the adhesion of the deposited metal and the electrical conductivity may be degraded, thereby reducing the electrodeposition coating properties of a weld metal.

Therefore, it can be confirmed that the electrodeposition coating properties of the weld metal may be effectively improved by significantly reducing an area fraction of the silicon-based oxide and actively forming the manganese-based slag, of the slag attached to the deposited metal, during welding using a wire for welding.

For this purpose, the content of Si included in component elements of the wire for welding may be significantly reduced to be 0.15% or less. As the content of Si decreases, porosity resistance may increase when a galvanized steel sheet is welded. Such an exemplary embodiment in the present disclosure is clearly distinguished from that of the standard welding materials as shown in Table 2 below, which may contain 0.4% or more of Si.

**[Table 2]**

| AWS Classification^{b} | | UNS^{c} Number | Weight Percent^{a} | | | | | | | | | | | | |
|---|---|---|---|---|---|---|---|---|---|---|---|---|---|---|---|
| A5.18 | A5.18M | | C | Mn | Si | P | S | Ni | Cr | Mo | V | Cu^{d} | Ti | Zr | Al |
| ER70S-2 | ER48S-2 - | K10726 - | 0.07 - | 0.90 to 1.40 | 0.40 to 0.70 | 0.025 - | 0.035 - | 0.15 - | 0.15 - | 0.15 - | 0.03 - | 0.50 - | 0.05 to 0.15 | 0.02 to 0.12 | 0.05 to 0.15 |
| ER70S-3 | ER48S-3 - | K11022 - | 0.06 to 0.15 | 0.90 to 1.40 | 0.45 to 0.75 | 0.025 | 0.035 | 0.15 | 0.15 | 0.15 | 0.03 | 0.50 | - | - | - |
| ER70S-4 | ER48S-4 - | K11132 - | 0.06 to 0.15 | 1.00 to 1.50 | 0.65 to 0.85 | 0.025 | 0.035 | 0.15 | 0.15 | 0.15 | 0.03 | 0.50 | - | - | - |
| ER70S-6 | ER48S-6 - | K11140 - | 0:06 to 0.15 | 1.40 to 1.85 | 0.80 to 1.15 | 0.025 | 0.035 | 0.15 | 0.15 | 0.15 | 0.03 | 0.50 | - | - | - |
| ER70S-7 | ER48S-7 - | K11125 - | 0.07 to 0.15 | 1.50 to 2.00^{e} | 0.50 to 0.80 | 0.025 | 0.035 | 0.15 | 0.15 | 0.15 | 0.03 | 0.50 | - | - | - |
| ER70S-G | ER48S-G | - | | | | | | Not specified^{f} | | | | | | | |

Thus, the wire for welding, according to an exemplary embodiment in the present disclosure, may include: by wt %, 0.001 to 0.30% of C; 0.15% or less of Si; 0.50 to 3.00% of Mn; 0.030% or less of P; 0.030% or less of S; and a balance of Fe and inevitable impurities.

The composition of the wire for welding, according to an exemplary embodiment in the present disclosure, and the reasons for limiting the contents thereof will be described hereinafter, and the symbol, %, refers to weight %.

### Carbon (C): 0.001 to 0.30%

Carbon (C) may increase the hardness of steel and reduce the toughness and ductility thereof. As the content of C reaches a predetermined level, C may increase the strength of steel. However, as the content of C increases, the brittleness of steel may increase. It may be necessary to set a lower limit of the content of C to 0.001% to secure a desired amount of strength during large heat-input welding and to set an upper limit thereof to 0.30% to reduce the brittleness.

### Silicon (Si): 0.15% or less

In general, the content of Silicon (Si), included in a carbon steel welding material, may range from 0.4 to 1.15%. Si may be used as a deoxidizer and may form SiO₂ or a silicic acid inclusion. Si may increase hardness, limit of elasticity, and tensile strength of steel and may reduce elongation thereof and impact thereon. Si may increase the size of crystal grains to reduce malleability and ductility.

However, when the content of Si exceeds 0.15%, the amount of silicon-based slag generated may increase, so that a weld metal having excellent electrodeposition coating properties may not be manufactured.

The content of Si may be adjusted to be 0.10% or less, more preferably, to secure electrodeposition coating properties and porosity resistance.

Considering the aspect of ensuring tensile strength of a weld joint therewith, it may be more preferable to adjust the content of Si to be 0.001 to 0.10%.

### Manganese (Mn): 0.50 to 3.00%

In general, Manganese (Mn), included in carbon steel, may have a range between that of AISI 1005 carbon steel, 0.35% max, and that of AISI 1085 carbon steel, 1.0% max.

Mn may combine with sulfur (S) in steel to form MnS to prevent FeS, a low-melting-point compound from being generated, thus stopping hot cracking from occurring. Mn may refine pearlite and may cause solid solution strengthening of ferrite to increase yield strength of steel. Therefore, it may be necessary to set a lower limit of the content of Mn to 0.50% to maintain significantly reduced yield strength. Further, since the content of Si, a major deoxidizing element, included in the wire for welding, is maintained at an extremely low level, the content of Mn, serving as a deoxidizer within the deposited metal, may tend to decrease. Therefore, an upper limit of the content of Mn may be set to, for example, 3.00% in an exemplary embodiment in the present disclosure.

In addition, the contents of Mn and Si may be adjusted, such that the Si²-to-Mn ratio may satisfy a range of 0.015 or less. This is because when the Si²-to-Mn ratio exceeds 0.015, the bead exterior may be degraded and the silicon-based slag may begin to form in the case of the wire for welding, so that corrosion resistance thereto after coating may decrease.

### Phosphorus (P): 0.030% or less

Phosphorus (P) may form a Fe₃P compound. P, included in steel, may be extremely weak and may cause segregation. Thus, it may be necessary to limit an upper limit of the content of P to 0.030%.

### Sulfur (S): 0.030% or less

In general, sulfur (S) may be present in an amount of up to 0.05% in carbon steel. In a red hot state, S may increase brittleness and may reduce tensile strength, elongation, and impact. Further, S may degrade porosity resistance of the weld joint when the galvanized steel sheet is welded. Thus, an upper limit of the content of S may be limited to, for example, 0.030%.

The wire for welding, according to an exemplary embodiment in the present disclosure, may further include: at least one selected from among 0.001 to 0.900% of Ni, 0.001 to 0.100% of Cr, 0.001 to 0.500% of Mo, and 0.50% or less of Cu.

### Nickel (Ni): 0.001 to 0.900%

Nickel (Ni) may refine microstructures of steel and may be easily dissolved in austenite and ferrite, thus being used for matrix strengthening. Ni, an austenite stabilizing element, may combine with chromium (Cr) to be used in austenite-based stainless steel, heat resistant steel, and the like. Further, Ni may strengthen low-temperature toughness of steel and may be a component element useful so as not to degrade weldability and malleability.

In an exemplary embodiment in the present disclosure, a lower limit of the content of Ni may be adjusted to be, for example, 0.001% to secure strength of the deposited metal. In addition, Ni, the austenite stabilizing element, may be likely to be vulnerable to hot cracking by forming austenite when being added in a large amount. Thus, an upper limit of the content of Ni may be limited to, for example, 0.900%.

### Chromium (Cr): 0.001-0.100%

Chromium (Cr) may increase strength and hardness of the deposited metal and may facilitate carbide formation. Further, Cr may increase corrosion resistance, heat resistance, and wear resistance.

In an exemplary embodiment in the present disclosure, a lower limit of the content of Cr may be limited to, for example, 0.001%, and an upper limit thereof to, for example, 0.100%, to maintain a proper level of strength.

### Molybdenum (Mo): 0.001 to 0.500%

Molybdenum (Mo) may increase strength and corrosion resistance and may prevent tempering brittleness. A lower limit of the content of Mo may be set to, for example, 0.001% to secure strength of the deposited metal. In addition, when the content of Mo exceeds 0.500%, the strength and hardenability of the deposited metal may not increase any further. Thus, an upper limit of the content of Mo may be adjusted to, for example, 0.500%.

### Copper (Cu): 0.50% or less

Copper (Cu) may increase tensile strength and limit of elasticity of the deposited metal and may increase corrosion resistance thereto. However, Cu may cause cracking during rolling. Thus, an upper limit of the content of Cu may be limited to, for example, 0.50%.

The wire for welding, according to an exemplary embodiment in the present disclosure, may further include: at least one selected from among 0.50% or less of Ti, 0.50% or less of Al, 0.50% or less of Nb, 0.10% or less of V, and 0.10% or less of Zr.

### Titanium (Ti): 0.50% or less

Titanium (Ti) may have a significantly high degree of resistance to corrosion and may serve as an arc stabilizer at high current during welding. Ti may be a slag formation element. Thus, an upper limit of the content of Ti may be limited to, for example, 0.50% or less.

### Vanadium (V): 0.10% or less

Vanadium (V) may have a high degree of carbide formability to form a particulate carbide, thus refining microstructures of steel, and may have a higher degree of temper softening resistance than Mo. In addition, V may improve high-temperature strength. However, when the content of V exceeds 0.1%, an effect of the addition of V may not be expected. Thus, the content of V may be adjusted to be, for example, 0.1% or less.

### Niobium (Nb): 0.50% or less

Niobium (Nb), a strong crystal grain refining element, may increase the crystal grain coarsening temperature. Nb may degrade hardenability and may reduce tempering brittleness. Thus, in an exemplary embodiment in the present disclosure, the content of Nb may be limited to, for example, 0.5% or less.

### Zirconium (Zr): 0.10% or less

Zirconium (Zr) may have a high degree of affinity with nitrogen (N), S, C, and hydrogen (H), and may be commonly used to fix these elements. It has been known that Zr may prevent flakes from occurring. Thus, in an exemplary embodiment in the present disclosure, the content of Zr may be limited to, for example, 0.1% or less.

### Aluminum (Al): 0.50% or less

Aluminum (Al) may be useful as a steel deoxidizer, together with Si. However, when the content of Al added to the deposited metal is high, Al may weaken steel. Thus, the content of Al may be limited to, for example, 0.5% or less.

The wire for welding, according to an exemplary embodiment in the present disclosure, may further include: 0.01% or less of boron (B) or 0.50% or less of rare earth elements (REM) .

### Boron (B): 0.01% or less

Boron (B) may significantly increase hardenability in a trace amount of 0.0005 to 0.003%. However, when the content of B is excessive, B may form Fe₃B to cause red shortness. Thus, an upper limit of the content of B may be limited to, for example, 0.01%.

### Rare Earth Elements (REM): 0.50% or less

Rare earth elements (REM) may include scandium (Sc), yttrium (Y), lanthanum (La), cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thulium (Tm), ytterbium (Yb), and lutetium (Lu), and may be added to a magnesium (Mg) alloy or an Al alloy, thus improving tensile strength or removing harmful impurities. REM may be rare in the form of mineral. Thus, when a trace amount of REM is added for a special purpose, material prices inevitably rise.

In an exemplary embodiment in the present disclosure, since REM does not affect an area fraction of the silicon-based slag and porosity resistance of the galvanized steel sheet, the main purposes of the present disclosure, the content of REM may be limited to 0.50% or less.

A remainder of the composition of the wire for welding may be Fe and inevitable impurities.

The above-mentioned composition of the wire for welding may be applied to a solid wire or a flux-cored wire (a metal-cored wire) . Further, the wire for welding, according to an exemplary embodiment in the present disclosure, may also be used as a wire used in surface acoustic wave (SAW) applications.

Further, in an exemplary embodiment in the present disclosure, when the welding base metal is welded using the wire for welding, having the above-mentioned composition, an area fraction of the silicon-based oxide slag in the overall surface area of the deposited metal may be 5% or less. That is, the electrodeposition coating properties or the like of the deposited metal may be improved by forming the manganese-based slag, rather than conventional silicon- and manganese-based slag.

Hereinafter, exemplary embodiments in the present disclosure will be described in more detail through examples.

### (Example 1)

Solid wires, having the compositions shown in Table 3 below, were prepared. Thereafter, the same amount of weld deposit was generated, even when the respective solid wires were used, by welding a 150 mm, 440 MPa-grade galvanized steel plate lap-joint base metal under welding conditions, such as a welding rate of 80 cpm, a setting current of 210 A, and a setting voltage of 25 V.

After this, the amount of silicon-based slag attached to a deposited metal, and porosity resistance, tensile strength, and weldability (spatter) of the deposited metal were estimated, and results of the estimation were shown in Table 4 below.

The amount of silicon-based slag is a value obtained by measuring an area fraction of the silicon-based slag in the overall surface area of the weld joint through 150 mm welding on a lap joint welding specimen under the same welding conditions . When the area fraction was 0 to 3%, the area fraction is indicated by A, when the area fraction was 3 to 5%, the area fraction is indicated by B, when the area fraction was 5 to 8%, the area fraction is indicated by C, and when the area fraction was 8% or higher, the area fraction is indicated by D.

Porosity resistance is a value obtained by performing 150 mm welding under the same welding conditions, subjecting the weld joint to radiography (RT), and measuring an area fraction of pores in the entirety of the weld joint. When the area fraction was 0 to 0.5%, the area fraction is indicated by A, when the area fraction was 0.5 to 1.0%, the area fraction is indicated by B, when the area fraction was 1.0 to 2.0%, the area fraction is indicated by C, and when the area fraction was 2.0% or higher, the area fraction is indicated by D.

Tensile strength is a value by producing a weld specimen as specified in AWS 5.18 and performing a tensile test on the weld specimen. When the tensile strength was 540 MPa or higher, the tensile strength is indicated by A, when the tensile strength was 510 MPa to 540 Mpa, the tensile strength is indicated by B, when the tensile strength was 480 MPa to 510 MPa, the tensile strength is indicated by C, and when the tensile strength was 480 MPa or less, the tensile strength is indicated by D.

Weldability is a value obtained by measuring output current variations of a welding current waveform output using a weld monitoring apparatus, under welding conditions, such as a setting current of 200 A, a setting voltage of 20 V, and a gas of 80% Ar + 20% CO₂. When the output current variations were 80 or less, the output current variations are indicated by A, when the output current variations were 80 to 90, the output current variations are indicated by B, when the output current variations were 90 to 100, the output current variations are indicated by C, and when the output current variations were 100 or higher, the output current variations are indicated by D.

**[Table 3]**

| Class ifica tion | Chemical Composition (wt%) | | | | | | | | Si²/Mn |
|---|---|---|---|---|---|---|---|---|---|
| | C | Si | Mn | P | S | D* | E* | B | |
| Inventive Example 1 | 0.08 | 0.02 | 1.66 | 0.009 | 0.003 | | | | 0.0002 |
| Inventive Example 2 | 0.09 | 0.02 | 1.70 | 0.009 | 0.003 | | | | 0.0002 |
| Inventive Example 3 | 0.09 | 0.03 | 1.58 | 0.010 | 0.002 | | | | 0.0006 |
| Inventive Example 4 | 0.08 | 0.15 | 1.67 | 0.010 | 0.005 | | | | 0.0135 |
| Inventive Example 5 | 0.08 | 0.12 | 1.66 | 0.011 | 0.004 | | | | 0.0087 |
| Inventive Example 6 | 0.07 | 0.10 | 1.58 | 0.010 | 0.004 | | | | 0.0063 |
| Inventive Example 7 | 0.09 | 0.09 | 1. 67 | 0.009 | 0.002 | | | | 0.0049 |
| Inventive Example 8 | 0.09 | 0.05 | 1.58 | 0.010 | 0.002 | 0.34 (Ni) | | | **0.0016** |
| Inventive Example 9 | 0.07 | 0.02 | 1. 60 | 0.009 | 0.003 | 0.08 (Cr) | | | 0.0003 |
| Inventive Example 10 | 0.08 | 0.02 | 1.70 | 0.009 | 0.003 | 0.018 (Mo) | | | 0.0002 |
| Inventive Example 11 | 0.09 | 0.04 | 1.57 | 0.010 | 0.003 | | 0.118 (Ti) | | 0.0010 |
| Inventive Example 12 | 0.08 | 0.02 | 1.58 | 0.009 | 0.003 | | | 0.003 | 0.0003 |
| Inventive Example 13 | 0.08 | 0.02 | 1.70 | 0.009 | 0.003 | 0.34 (Ni) | 0.118 (Ti) | | 0.0002 |
| Comparative Example 1 | 0.07 | 0.47 | 1.15 | 0.014 | 0.005 | | | | 0.1921 |
| Comparative Example 2 | 0.07 | 0.62 | 1.14 | 0.011 | 0.008 | | | | 0.3372 |
| Comparative Example 3 | 0.05 | 0.81 | 1.47 | 0.016 | 0.012 | | | | 0.4463 |
| Comparative Example 4 | 0.06 | 0.87 | 1.50 | 0.015 | 0.005 | | | | 0.5046 |
| Comparative Example 5 | 0.07 | 0.83 | 1.86 | 0.014 | 0.003 | 1.75 (Ni) | | | 0.3704 |
| Comparative Example 6 | 0.07 | 0.65 | 1.20 | 0.016 | 0.007 | 0.035 (Cr) | | | 0.3521 |
| Comparative Example 7 | 0.08 | 0.82 | 1.54 | 0.013 | 0.008 | | 0.008 (V) | | 0.4366 |
| Comparative Example 8 | 0.05 | 0.81 | 1.47 | 0.017 | 0.013 | | 0.19 (Ti) | | 0.4463 |
| Comparative Example 9 | 0.08 | 0.81 | 1.45 | 0.012 | 0.015 | | | 0.003 | 0.4525 |
| Comparative Example 10 | 0.05 | 0.16 | 1.70 | 0.009 | 0.002 | | | | 0.0151 |
| Comparative Example 11 | 0.07 | 0.20 | 1.74 | 0.010 | 0.004 | | | | 0.0230 |
| Comparative Example 12 | 0.05 | 0.30 | 1.72 | 0.011 | 0.004 | | | | 0.0523 |

In Table 3, D* may include at least one of Ni, Cr, Mo, and Cu, E* may include at least one of Ti, Al, Nb, V, and Zr, and a remainder of the composition may be Fe and REM.

**[Table 4]**

| Classif ication | Amount of Silicon-based Slag | Porosity Resistance | Tensile Strength | Weldability (Spatter) | Net Estimate |
|---|---|---|---|---|---|
| Inventive Example 1 | A | A | B | B | B |
| Inventive Example 2 | A | A | B | B | B |
| Inventive Example 3 | A | A | B | B | B |
| Inventive Example 4 | B | A | B | B | B |
| Inventive Example 5 | A | A | B | B | B |
| Inventive Example 6 | A | A | B | B | B |
| Inventive Example 7 | A | A | B | B | B |
| Inventive Example 8 | A | A | A | A | A |
| Inventive Example 9 | A | A | B | B | B |
| Inventive Example 10 | A | A | A | B | A |
| Inventive Example 11 | A | A | B | A | A |
| Inventive Example 12 | A | A | A | B | A |
| Inventive Example 13 | A | A | A | A | A |
| Comparative Example 1 | C | B | A | B | C |
| Comparative Example 2 | D | B | A | A | C |
| Comparative Example 3 | D | C | A | A | D |
| Comparative Example 4 | D | C | A | A | D |
| Comparative Example 5 | D | C | A | C | D |
| Comparative Example 6 | C | B | A | B | C |
| Compara tive Example 7 | D | C | A | A | D |
| Comparative Example 8 | D | C | A | A | D |
| Comparative Example 9 | D | C | A | C | D |
| Comparative Example 10 | C | A | B | B | C |
| Comparative Example 11 | C | B | B | B | C |
| Comparative Example 12 | C | B | B | B | C |

As shown in Tables 3 and 4, it could be seen that all Inventive Examples 1 to 13, having the compositions of the wires for welding satisfying the range of the present disclosure, had excellent porosity resistance, tensile strength, and weldability, and that even when the amount of the silicon-based slag, attached to the deposited metal, was small, electrodeposition coating properties of the deposited metal were improved. In particular, it could be seen that Inventive Examples 1 to 3 and Inventive Examples 6 to 13, having 0.1% or less of the content of Si contained in the wires for welding, had better properties than Inventive Examples 4 and 5, having higher than 0.1% of the content of Si contained in the wires for welding.

In addition, it could be seen that Inventive Example 8 contained Ni, thus improving impact toughness and tensile strength of the weld joint and exhibiting excellent feedability and arc stability, and that Inventive Example 9 contained Cr, thus slightly increasing tensile strength of the wire for welding and the weld joint.

Inventive Example 10 contained Mo, thus slightly increasing tensile strength of the wire for welding and the weld joint as in the case that Cr was added, and Inventive Example 11 contains Ti, thus improving arc stability during welding. In addition, Inventive Example 12 contained B, thus improving tensile strength of the weld joint.

Further, Inventive Example 13 contained Ni of Inventive Example 8, and Ti of Inventive Example 11, thus improving arc stability and feedability during welding and having excellent impact toughness and tensile strength of the weld metal.

In contrast, it could be seen that all Comparative Examples 1 to 12 contained higher than 0.15% of the content of Si and tended to have the amount of the silicon-based slag increased as the content of Si increased and to have porosity resistance decreased when the galvanized steel sheet was welded as the content of Si increases.

In detail, Comparative Example 5 contained Ni, thus improving impact toughness and tensile strength of the weld joint and increasing feedability and arc stability, but contained 0. 83% of the content of Si, so that a large amount of silicon-based slag was generated on the surfaces of the weld beads and pores were generated on the surfaces of the weld beads when the galvanized steel sheet was welded.

Comparative Example 6 contained Cr, thus slightly increasing tensile strength of the wire for welding and the weld joint, but contained 0.65% of the content of Si, so that the silicon-based slag was generated on the surfaces of the weld beads and porosity resistance was degraded.

Comparative Example 7 contained V, thus slightly increasing tensile strength of the wire for welding and the weld joint, but contained 0.82% of the content of Si, so that the silicon-based slag was generated on the surfaces of the weld beads and porosity resistance was degraded.

Comparative Example 8 contained Ti, thus improving arc stability during welding, but contained 0.81% of the content of Si, so that a large amount of silicon-based slag was generated on the surfaces of the weld beads and porosity resistance was degraded.

Comparative Example 9 contained B, thus improving tensile strength of the weld joint, but contained 0.81% of the content of Si, so that a large amount of silicon-based slag was generated on the surfaces of the weld beads and porosity resistance was degraded.

Comparative Example 10 contained 0.16% of the content of Si, so that the amount of silicon-based slag generated on the surfaces of the weld beads was slightly increased.

Comparative Example 11 contained 0.20% of the content of Si, so that the content of silicon-based slag generated on the surfaces of the weld beads was increased to 5.1% and porosity resistance was degraded.

Comparative Example 12 contained 0.30% of the content of Si, so that the amount of silicon-based slag generated on the surfaces of the weld beads was increased and porosity resistance was degraded.

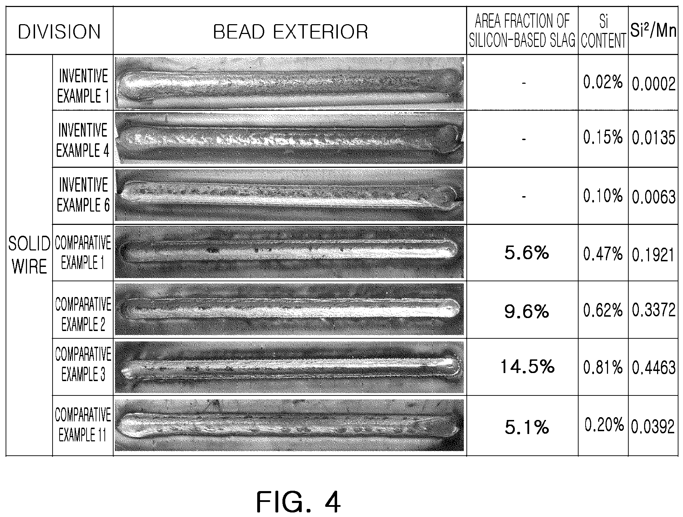

Meanwhile, FIG. 4 illustrates exterior images of the weld beads of Inventive Examples 1, 4, and 6, and Comparative Examples 1 to 3 and 11 in the present exemplary embodiment, the area fractions of silicon-based slag were measured, and results of the measurement are shown on the right of the exterior images.

To measure the area fractions of silicon-based slag, the welding experimentation was performed, such that the same amount of weld deposit was generated, even when other wires for welding were used, by preparing a 150 mm galvanized steel sheet lap-joint base metal and setting a welding rate of 80 cpm, a setting current 210 A, and a setting voltage of 25 V. After the welding, the images of the weld beads were captured, only the portions of weld metals were extracted from the images, and then the area fractions of silicon-based slag in the overall surface area of the weld metals were measured using an image analysis program.

As illustrated in FIG. 4, it could be seen that, in Comparative Examples 1 to 3 and 11, the area fractions of silicon-based slag increased as the content of Si and the Si²-to-Mn ratio increased, but in the case of inventive Examples 1, 4, and 6, silicon-based slag was rarely generated. In particular, it could be seen that Inventive Example 1 had very smooth bead exterior.

### (Example 2)

The flux-cored wires (the metal-cored wires), having the compositions shown in Table 5 below, were prepared. Thereafter, the same amount of deposited metal was generated, even when the respective flux-cored wires were used, by welding a 150 mm, 440 MPa-grade galvanized steel sheet lap-joint base metal under welding conditions, such as a welding rate of 80 cpm, a setting current 210 A, and a setting voltage of 25 V, using the respective flux-cored wires.

After the welding, the amount of silicon-based slag attached to the deposited metal, and porosity resistance, and tensile strength, and weldability (spatter) of the deposited metal were estimated, and results of the estimation are shown in Table 6 below. The detailed estimate standard is the same as that of Example 1.

**[Table 5]**

| Class ifica tion | Chemical Composition (wt%) | | | | | | | | Si²/Mn |
|---|---|---|---|---|---|---|---|---|---|
| | C | Si | Mn | P | S | D* | E* | B | |
| Inventive Example 1 | 0.11 | 0.03 | 1.76 | 0.007 | 0.005 | | | | 0.0005 |
| Inventive Example 2 | 0.10 | 0.12 | 1.74 | 0.009 | 0.004 | | | | 0.0083 |
| Inventive Example 3 | 0.08 | 0.01 | 1.24 | 0.008 | 0.006 | | | | 0.0001 |
| Inventive Example 4 | 0.09 | 0.01 | 1.27 | 0.008 | 0.003 | 0.31 (N i) | | | 0.0001 |
| Inventive Example 5 | 0.08 | 0.01 | 1.23 | 0.007 | 0.004 | | 0.01 (Ti) | | 0.0001 |
| Inventive Example 6 | 0.10 | 0.01 | 1.24 | 0.007 | 0.003 | | | 0.001 | 0.0001 |
| Inventive Example 7 | 0.10 | 0.15 | 1.75 | 0.008 | 0.004 | | | | 0.0129 |
| Inventive Example 8 | 0.09 | 0.10 | 1.77 | 0.008 | 0.003 | | | | 0.0056 |
| Inventive Example 9 | 0.09 | 0.09 | 1.77 | 0.009 | 0.004 | | | | 0.004 6 |
| Comparative Example 1 | 0.11 | 0.31 | 1.75 | 0.010 | 0.005 | | | | 0.054 9 |
| Comparative Example 2 | 0.11 | 0.49 | 1.73 | 0.009 | 0.003 | | | | 0.138 8 |
| Comparative Example 3 | 0.09 | 0.61 | 1.57 | 0.025 | 0.014 | | | | 0.237 0 |
| Comparative Example 4 | 0.05 | 0.55 | 1.45 | 0.013 | 0.010 | 0.32(N i) | | | 0.208 6 |
| Comparative Example 5 | 0.07 | 0.65 | 1.45 | 0.010 | 0.010 | | 0.01 (Ti) | | 0.2914 |
| Comparativ e Example 6 | 0.05 | 0.70 | 1.45 | 0.012 | 0.010 | | | 0.001 | 0.3379 |
| Comparative Example 7 | 0.10 | 0.16 | 1.72 | 0.008 | 0.004 | | | | 0.0149 |
| Comparative Example 8 | 0.12 | 0.20 | 1.73 | 0.009 | 0.004 | | | | 0.0231 |
| Comparative Example 9 | 0.12 | 0.35 | 1.70 | 0.007 | 0.003 | | | | 0.0721 |

In Table 5, D* may include at least one of Ni, Cr, Mo, and Cu, E* may include at least one of Ti, Al, Nb, V, and Zr, and a remainder of the composition may be Fe and REM.

**[Table 6]**

| Classif ication | Amount of Silicon-based Slag | Porosity Resistance | Tensile Strength | Weldability (Spatter) | Net Estimate |
|---|---|---|---|---|---|
| Inventive Example 1 | A | A | A | B | A |
| Inventive Example 2 | A | A | A | B | A |
| Inventive Example 3 | A | A | B | B | B |
| Inventive Example 4 | A | A | A | B | A |
| Inventive Example 5 | A | A | B | A | A |
| Inventive Example 6 | A | A | A | B | A |
| Inventive Example 7 | B | A | B | B | B |
| Inventive Example 8 | A | A | B | B | B |
| Inventive Example 9 | A | A | B | B | B |
| Compara tive Example 1 | C | A | B | B | C |
| Comparative Example 2 | D | C | B | B | D |
| Comparative Example 3 | D | D | A | B | D |
| Comparative Example 4 | D | C | A | A | C |
| Comparative Example 5 | D | D | A | A | D |
| Comparative Example 6 | D | D | A | B | D |
| Comparative Example 7 | C | A | B | B | C |
| Comparative Example 8 | C | A | B | B | C |
| Comparative Example 9 | C | B | B | B | C |

As shown in Tables 5 and 6, in the case of Inventive Examples 1 to 9 using the flux-cored wires, satisfying the compositions according to an exemplary embodiment in the present disclosure, it could be seen that the amounts of silicon-based slag were reduced and that porosity resistance was improved when the galvanized steel sheet was welded, according to a decrease in the content of Si.

Inventive Example 4 contained Ni, thus improving impact toughness and tensile strength of the weld joint and having excellent feedability and arc stability.

Inventive Example 5 contained Ti, thus improving arc stability, and Inventive Example 6 contained B, thus improving tensile strength of the weld joint.

In contrast, Comparative Examples 1 to 3 contained 0.30% or higher of the content of Si and tended to have the amount of silicon-based slag increased as the content of Si increased. In addition, as the content of Si increased, porosity resistance was reduced when the galvanized steel sheet was welded.

Comparative Example 4 contained Ni, thus improving impact toughness and tensile strength of the weld joint, but contained 0.55% of the content of Si, so that a large amount of silicon-based slag was generated on the surfaces of the weld beads.

Comparative Example 5 contained Ti, thus improving weldability, but contained 0.65% of the content of Si, so that a large amount of silicon-based slag was generated on the surfaces of the weld beads.

Comparative Example 6 contained B, thus improving tensile strength of the weld joint, but contained 0.70% of the content of Si, so that a large amount of silicon-based slag was generated on the surfaces of the welding beads and porosity resistance of the galvanized steel sheet was degraded.

Comparative Examples 7 to 9 contained 0.15% or more of the content of Si, and as the content of Si increased, the amount of silicon-based slag, generated on the surfaces of the welding beads, increased, and porosity resistance was reduced gradually.

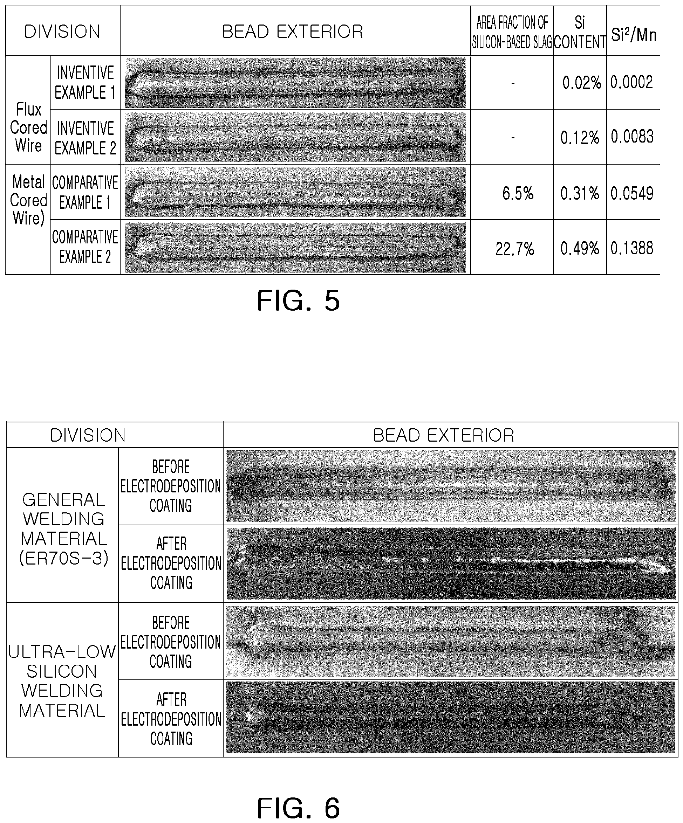

Meanwhile, FIG. 5 illustrates exterior images of the welding beads of Inventive Examples 1 and 2 and Comparative Examples 1 and 2 in the present exemplary embodiment, the area fractions of silicon-based slag were measured, and results of the measurement are shown on the right of the exterior images. Here, a method of measuring the area fractions of silicon-based slag is the same as that in Example 1 described above.

As illustrated in FIG. 5, from Inventive Example 1 to Comparative Example 2, the content of Si and the Si²-to-Mn ratio increased, and the area fractions of silicon-based slag increased, in proportion to the increases in the content of Si and the Si²-to-Mn ratio. In particular, in the case of Inventive Example 1, it could be seen that the silicon-based slag was hardly formed, so that the weld beads had a very smooth exterior.

### (Example 3)

The solid wire of Inventive Example 13 of Example 1 described above, and a solid wire of a conventional welding material ER70S-3 mainly used in welding a conventional galvanized steel sheet and a general steel sheet were prepared. Subsequently, specimens, each having a deposited metal formed thereon, were produced by welding a 150 mm, 440 MPa-grade galvanized steel sheet lap-joint base metal under welding conditions, such as a welding rate of 80 cpm, a setting current 210 A, and a setting voltage of 25 V. Here, the same amount of deposited metal was generated, even when the respective solid wires were used.

FIG. 6 is a table of electrodeposition coating results of deposited metals formed during welding using the conventional welding material and the ultra-low silicon welding material (Inventive Example 13), according to an exemplary embodiment in the present disclosure. As illustrated in FIG. 6, in the case of the conventional welding material having yellow vitreous silicon-based slag formed thereon, it could be seen that an electrodeposition coating was not properly formed, so that the electrodeposition coating was separated. In contrast, in the case of the ultra-low silicon welding material (Inventive Example 13), it could be seen that an extremely low content of Si caused gray manganese-based slag to be generated, so that an electrodeposition coating was formed very uniformly and clearly.

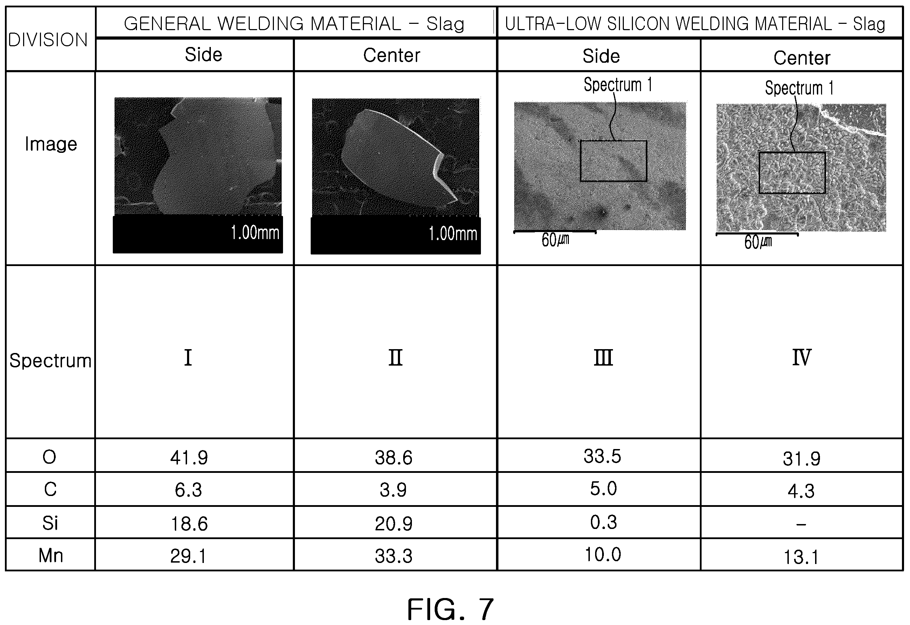

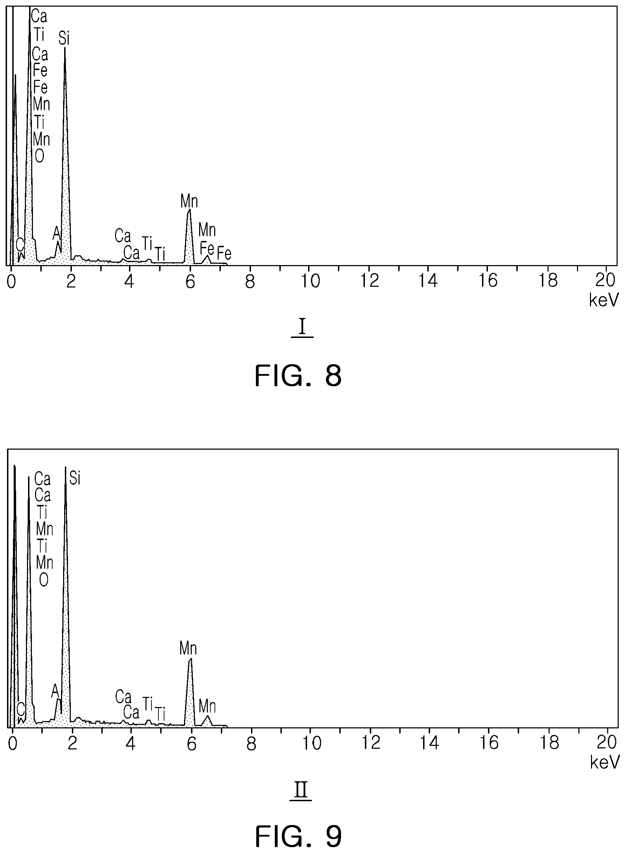

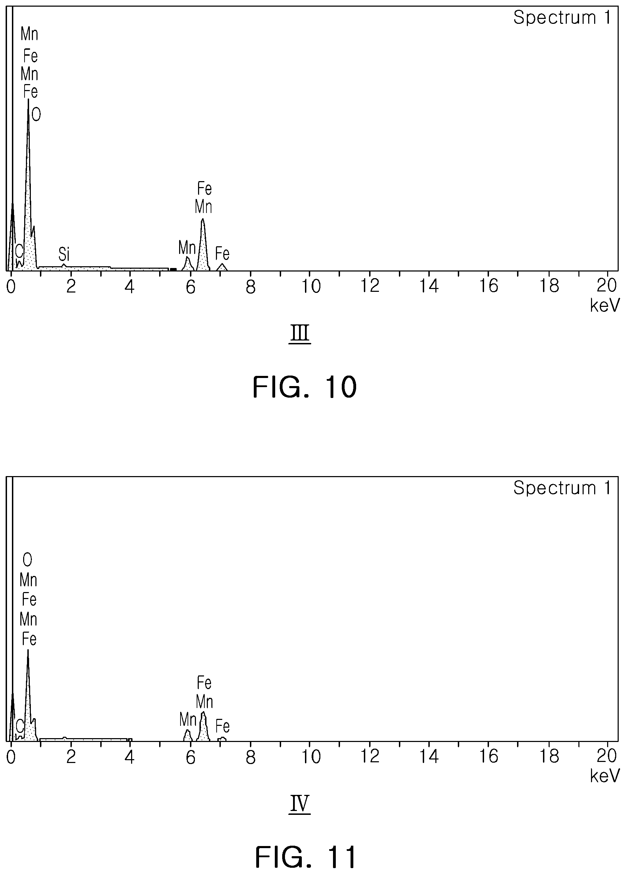

Meanwhile, FIG. 7 is a table of energy-dispersive X-ray spectroscopy (EDS) analysis results of slag components of deposited metals formed on the two specimens. FIGS. 8 through 11 are respective views of the EDS analysis results (I, II, III, and IV) of FIG. 7.

As illustrated in FIGS. 7 through 11, Si, Mn, and O were detected from slag of the conventional welding material, and it was confirmed that the slag was silicon- and manganese-based slag. The silicon- and manganese-based slag is taken as be present on the surfaces of the weld beads after silicon and manganese contained in the wire migrate to combine with oxygen.

In contrast, as an analysis result of the slag of the ultra-low silicon welding material (Inventive Example 13), according to an exemplary embodiment in the present disclosure, Mn, C, and O were mainly detected, and it was confirmed that the slag was manganese-based slag. It could be seen that, since the content of Si contained in the wire was extremely low, the manganese-based slag was mainly generated.

As set forth above, according to exemplary embodiments in the present disclosure, having the above-mentioned composition, electrically conductive manganese (Mn) -based slag may be formed on the surfaces of weld beads, using an ultra-low silicon welding material, thus increasing electrodeposition coating properties during electrodeposition coating.

Further, Mn-based slag, having relatively higher bond strength than silicon-based slag, may be formed, thus increasing coating adhesion properties after electrodeposition coating.

Further, the ultra-low silicon welding material may be used in various shielding gas conditions from Ar + 5% CO2 to 100% CO2, without being only used in a specific shielding gas.

Moreover, when a galvanized steel sheet is welded, the weld joint may have excellent porosity resistance.

While exemplary embodiments have been shown and described above, it will be apparent to those skilled in the art that modifications and variations could be made without departing from the scope of the present disclosure, as defined by the appended claims.

## Claims

1. An ultra-low silicon wire for welding having excellent porosity resistance and electrodeposition coating properties, comprising:
by wt%, 0.001 to 0.30% of C; 0.15% or less of Si; 0.50 to 3. 00% of Mn; 0.030% or less of P; 0.030% or less of S; and a balance of Fe and inevitable impurities.

2. The ultra-low silicon wire for welding of claim 1, satisfying a Si²-to-Mn ratio of 0.015 or less.

3. The ultra-low silicon wire for welding of claim 1, wherein the content of Si is within a range of 0.001 to 0.1%.

4. The ultra-low silicon wire for welding of claim 1, further comprising: at least one selected from among 0.001 to 0.900% of Ni, 0.001 to 0.100% of Cr, 0.001 to 0.500% of Mo, and 0.50% or less of Cu.

5. The ultra-low silicon wire for welding of claim 1, further comprising: at least one selected from among 0.50% or less of Ti, 0.50% or less of Al, 0.50% or less of Nb, 0.10% or less of V, and 0.10% or less of Zr.

6. The ultra-low silicon wire for welding of claim 1, further comprising: 0.01% or less of B or 0.50% or less of REM.

7. The ultra-low silicon wire for welding of claim 1, being a solid wire or a flux-cored wire.

8. A deposited metal having electrodeposition coating properties, obtained by welding a welding base metal using a wire for welding, comprising slag attached to a surface thereof,
wherein, in the overall surface area of the deposited metal, an area fraction of silicon-based oxide slag is 5% or less.

9. The deposited metal of claim 8, wherein the wire for welding comprises: by wt %, 0.001 to 0.30% of C; 0.15% or less of Si; 0.50 to 3.00% of Mn; 0.030% or less of P; 0.030% or less of S; and a balance of Fe and inevitable impurities.

10. The deposited metal of claim 9, wherein the wire for welding satisfies a Si²-to-Mn ratio of 0.015 or less.

11. The deposited metal of claim 9, wherein the wire for welding comprises 0.001 to 0.1% of Si.

12. The deposited metal of claim 9, wherein the wire for welding further comprises: at least one selected from among 0.001 to 0.900% of Ni, 0.001 to 0.100% of Cr, 0.001 to 0.500% of Mo, and 0.50% or less of Cu.

13. The deposited metal of claim 9, wherein the wire for welding further comprises: at least one selected from among 0.50% or less of Ti, 0.50% or less of Al, 0.50% or less of Nb, 0.10% or less of V, and 0.10% or less of Zr.

14. The deposited metal of claim 9, wherein the wire for welding further comprises: 0.01% or less of B or 0.50% or less of REM.

15. The deposited metal of claim 8, wherein the wire for welding is a solid wire or a flux-cored wire.
